Europäisches Patentamt

European Patent Office

Office européen des brevets

(11) Publication number: **0 506 004 A1**

# EUROPEAN PATENT APPLICATION

(21) Application number: **92105113.2**

(22) Date of filing: **25.03.92**

(51) Int. Cl.⁵: **B29D 11/00, B29C 45/27**

(30) Priority: **28.03.91 JP 63625/91**

(43) Date of publication of application:
**30.09.92 Bulletin 92/40**

(84) Designated Contracting States:
**DE FR GB**

(71) Applicant: **MUNEKATA CO., LTD.**
**1-30, Zushi 1-chome**
**Takatuki-city, Osaka(JP)**

(72) Inventor: **Takemura, Kenji**
**6-7, Amanogaharacho 1-chome**
**Katano-city, Osaka(JP)**
Inventor: **Sampei, Yoshimi**
**9-2, Tazawa aza Sakuradai**
**Fukushima-city, Fukushima(JP)**

(74) Representative: **Tiedtke, Harro, Dipl.-Ing.**
**Patentanwaltsbüro Tiedtke-Bühling-Kinne-**
**Grupe-Pellmann-Grams Bavariaring 4**
**Postfach 20 24 03**
**W-8000 München 2(DE)**

(54) **Ferrule molding tool.**

(57) A ferrule molding tool which comprises a ring runner (2) which surrounds the cavity and a film gate (3) which extends from the inner periphery of the runner to the cavity (1), so that the molding resin material injected through the sprue (4) enters the cavity from its periphery through the runner and gate. This construction reduces the uneven directional molding shrinkage which would otherwise occur in the cooling cycle after injection, thereby giving a ferrule having a good roundness.

FIG. I

# BACKGROUND OF THE INVENTION

## 1. Field of the Invention:

The present invention relates to a ferrule molding tool to form a ferrule to be used for the optical fiber connector.

## 2. Description of the Prior Art:

It is necessary to join optical fibers together to establish an optical fiber communications network. The joining of optical fibers is accomplished by the aid of an optical fiber connector. The optical fiber connector needs ferrules. There have been proposed several methods for producing ferrules in large quantities to meet the future increasing demand. On of them is injection molding from a thermoplastic organic polymeric material. It is known well that injection-molded articles are subject to molding shrinkage. Molding shrinkage depends on the structure of the molding tool, especially that part of the mold which extends from the runner to the gate. On the other hand, the ferrule is required to have a truly round periphery so that optical fibers are butted in accurate alignment when it is inserted into the cylindrical optical fiber connector. The roundness required for the ferrule is usually 3.0 $\mu$m or less. Almost the same accuracy is also required of cylindricality.

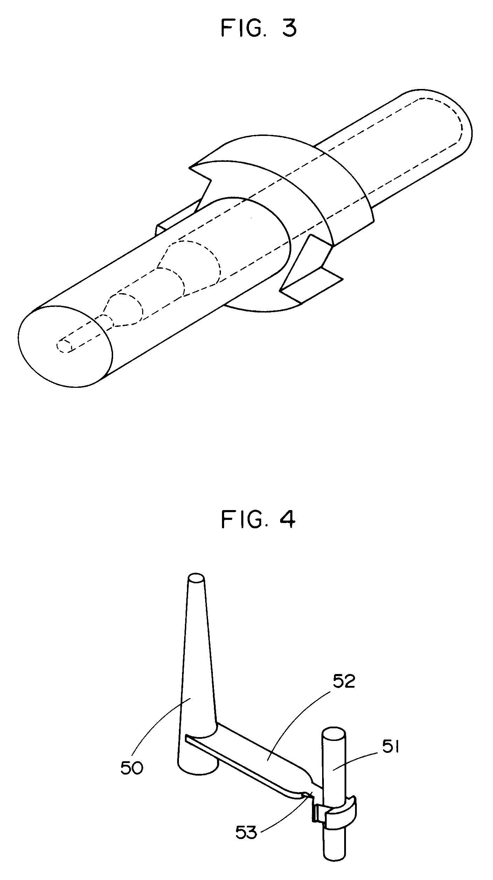

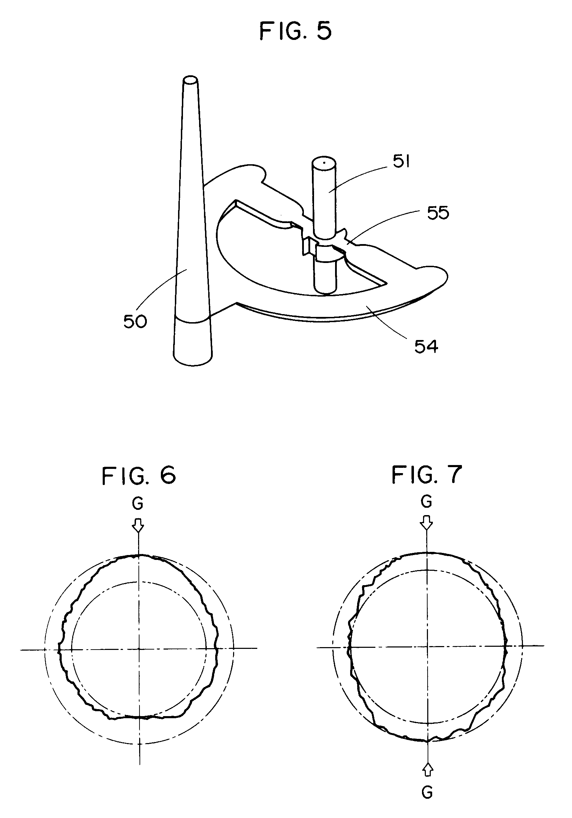

A conventional ferrule molding tool is shown in Figs. 4 and 5. (The drawing represents the hollow part in the molding tool which is filled with the molding resin material.) Referring to Fig. 4, there are shown a sprue 50, a straight runner 52, a gate 52, and a cavity 51. Referring to Fig. 5, there are shown a sprue 50, a semicircular runner 54, a dual gate 55, and a cavity 51.

It was found that the ferrule molding tool as mentioned above causes shrinkage strain due to uneven orientation of the molding material in the product. The ferrules molded by the molding tools shown in Figs. 4 and 5 have the shrinkage strain as shown in Figs. 6 and 7, respectively. It is noted that the shrinkage near the gate G is much larger than that at the part far away from the gate. This molding shrinkage gives rise to a roundness of 5-10 $\mu$m, which does not meet the market requirement.

# SUMMARY OF THE INVENTION

It is an object of the present invention to provide a ferrule molding tool which gives a ferrule having a good roundness because of its ability to reduce the uneven directional shrinkage which occurs in the cooling cycle after injection.

The ferrule molding tool of the present invention comprises a ring runner which surrounds the cavity and a film gate which extends from the inner periphery of the runner to the cavity, so that the molding resin material injected through the sprue enters the cavity through the runner and gate.

The ferrule molding tool constructed as mentioned above permits the injected molding material to be oriented uniformly in the molded ferrule. Therefore, the molded ferrule has a uniform shrinkage and is free of shrinkage strain. This contributes to the roundness of the ferrule.

# BRIEF DESCRIPTION OF THE DRAWINGS

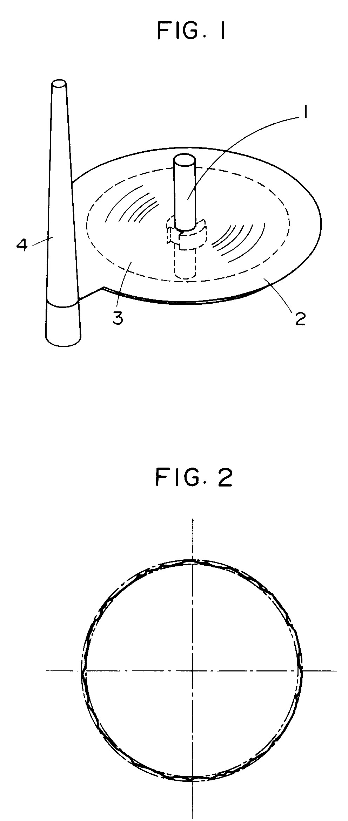

Fig. 1 is a perspective view showing the hollow part in the ferrule molding tool pertaining to an embodiment of the present invention.

Fig. 2 is a schematic representation showing the external shape of the ferrule in the cooled state after injection molding by the ferrule molding tool shown in Fig. 1.

Fig. 3 is a perspective view showing the ferrule.

Fig. 4 is a perspective view showing the hollow part in a conventional ferrule molding tool.

Fig. 5 is a perspective view showing the hollow part in another conventional ferrule molding tool.

Fig. 6 is a schematic representation showing the external shape of the ferrule in the cooled state after injection molding by the ferrule molding tool shown in Fig. 4.

Fig. 7 is a schematic representation showing the external shape of the ferrule in the cooled state after injection molding by the ferrule molding tool shown in Fig. 5.

# DESCRIPTION OF THE PREFERRED EMBODIMENTS

The ferrule molding tool pertaining to an embodiment of the present invention will be explained with reference to Figs. 1 and 3. This ferrule molding tool is intended for injection molding. Fig. 1 shows the hollow part in the molding tool into which the molding resin material (such as thermoplastic organic polymeric material) flows by injection. The hollow part is composed of a cavity 1, a ring runner 2 surrounding the cavity 1, and a film gate 3 which extends from the entire inner periphery of the runner 2. The gate 3 should preferably be about 0.3 mm thick. There is a sprue 4 next to the runner 2.

At the time of injection molding, the ferrule molding tool constructed as mentioned above permits a molding resin material to flow as follows: The injected resin enters the sprue 4. It spreads into the ring runner 2 and then converges in the gate 3. It finally enters the cavity in the horizontal all directions.

The injection molded ferrule after cooling has the external shape as shown in Fig. 2. It is noted that the ferrule has very little unevenness due to molding shrinkage and hence has a very high degree of roundness. A conceivable reason for this is the uniform molding shrinkage due to the uniform orientation of the material in the cavity 1 which results from the ring runner 2 surrounding the cavity 1 and the gate 3 extending from the entire inner periphery of the runner 2 to the cavity 1. Moreover, the flow of the resin from the gate 3 toward the cavity 1 in the horizontal all directions causes very little shrinkage strain as the resin solidifies. This also greatly contributes to the good roundness as well as the good cylindricality.

Incidentally, the runner 2 may be polygonal, and the gate 3 may be partly absent within the inner periphery of the runner 2.

A ferrule molding tool which comprises a ring runner which surrounds the cavity and a film gate which extends from the inner periphery of the runner to the cavity, so that the molding resin material injected through the sprue enters the cavity from its periphery through the runner and gate. This construction reduces the uneven directional molding shrinkage which would otherwise occur in the cooling cycle after injection, thereby giving a ferrule having a good roundness.

**Claims**

1. A ferrule molding tool which comprises a ring runner which surrounds the cavity and a film gate which extends from the inner periphery of the runner to the cavity, so that the molding resin material injected through the sprue enters the cavity from its periphery through the runner and gate.

2. A ferrule molding tool as defined in Claim 1, wherein the runner is circular and the gate is discoid.

3. A ferrule molding tool as defined in Claim 1, wherein the gate encircles the cavity at the center of its length.

FIG. 1

FIG. 2

FIG. 3

FIG. 4

FIG. 5

51

55

50

54

FIG. 6

G

FIG. 7

G

G

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,P | PATENT ABSTRACTS OF JAPAN vol. 15, no. 174 (M-1109)2 May 1991 | 1 | B29D11/00 B29C45/27 |
| Y | & JP-A-3039218 ( HITACHI ), 20 February 1991 * abstract * | 1 | |
| A | | 2 | |
| Y | EP-A-0 301 775 (THOMAS & BETTS CORP.) * claim 9 * | 1 | |
| A | PATENT ABSTRACTS OF JAPAN vol. 14, no. 247 (M-978)25 May 1990 & JP-A-2 069 215 ( MITSUBISHI ELECTRIC ) 8 March 1990 * abstract * | 1 | |
| | | | **TECHNICAL FIELDS SEARCHED (Int. Cl.5)** |
| | | | B29D B23P B29C G02B |

The present search report has been drawn up for all claims

| Place of search | Date of completion of the search | Examiner |
|---|---|---|
| BERLIN | 17 JUNE 1992 | HYLLA W. |